**Europäisches Patentamt**

**European Patent Office**

**Office européen des brevets**

(19)

(11) Veröffentlichungsnummer : **0 397 899 B1**

(12)
# EUROPÄISCHE PATENTSCHRIFT

(45) Veröffentlichungstag der Patentschrift :
**19.08.92 Patentblatt 92/34**

(51) Int. Cl.$^5$ : **B60H 1/00**

(21) Anmeldenummer : **89108771.0**

(22) Anmeldetag : **16.05.89**

(54) **Heiz- bzw. Klimagerät für ein Kraftfahrzeug.**

(43) Veröffentlichungstag der Anmeldung :
**22.11.90 Patentblatt 90/47**

(45) Bekanntmachung des Hinweises auf die Patenterteilung :
**19.08.92 Patentblatt 92/34**

(84) Benannte Vertragsstaaten :
**DE ES FR GB**

(56) Entgegenhaltungen :
**EP-A- 178 455
DE-U- 7 138 451
US-A- 4 325 174**

(73) Patentinhaber : **SIEMENS
AKTIENGESELLSCHAFT
Wittelsbacherplatz 2
W-8000 München 2 (DE)**

(72) Erfinder : **Ziegler, Elmar, Dipl.-Ing. (FH)
Wiesenstrasse 9
W-8637 Ahorn (DE)**

## Beschreibung

Die Erfindung bezieht sich auf ein Heiz- bzw. Klimagerät für ein Kraftfahrzeug gemäß Oberbegriff des Anspruchs 1.

Die Übertragung der Verstellbewegung des Drehknopfes auf die im Heiz- bzw. Klimagerät schwenkbar gelagerten Luftklappen kann z.B. durch elektrische Leitungsverbindungen zu dann notwendigerweise mit den Schwenkachsen der Luftklappen gekoppelten Elektromotoren oder auf mechanische Weise mittels Bowdenzügen erfolgen, wozu es in Nähe des Bediengerätes konstruktiv aufwendiger und platzbeanspruchender Kulissen- oder Zahnradübersetzungen der rotatorischen Einstellbewegung an dem Drehknopf in eine translatorische Stellbewegung an den Luftklappen bedarf.

Gemäß vorliegender Erfindung kann bei geringem Platzbedarf und geringem Bauteileaufwand in einfacher Weise die Verstellbewegung von zumindest einem Bediengerät-Drehknopf auf zumindest eine Luftklappe bzw. Luftklappensteuerung in einem Heiz-Klimagerät dadurch erreicht werden, daß in schrägem Abgangswinkel zur Drehwelle des Drehknopfes an diese eine biegsame Stahlwelle über eine Kreuzgelenkverbindung angekuppelt ist, wobei in weiterer fertigungs- und montagetechnischer Vereinfachung die Aufnahme für das Kreuzgelenk der Kreuzgelenkverbindung zweckmäßigerweise einstückig mit der Drehwelle und die andere Aufnahme für das Kreuzgelenk der Kreuzgelenkverbindung einstückig mit einer Zwischenwelle ausgebildet ist, an welche die biegsame Stahlwelle anschließbar ist.

Durch die erfindungsgemäße Konstruktion ist es möglich, die Drehbewegung des Drehknopfes am Bediengerät direkt über eine biegsame Stahlwelle bei geringem Platzbedarf durch die zur Drehwelle des Drehknopfes schräge Kreuzgelenkanbindung zu übertragen, wobei die Kreuzgelenkaufnahme in einfacher Weise an die an sich notwendige Drehwelle des Drehknopfes und an die Aufnahme für die Stahlwelle einstückig mitangespritzt werden können, wodurch zusätzlich getrennte Montageschritte, insbesondere im Sinne einer aufwandsarmen Automatenfertigung, eingespart werden können.

Durch die DE-U-7 138 451 ist eine Vorrichtung zum stufenlosen Regeln der Rotationsgeschwindigkeit von Gebläsen an Wohnwagenheizungen mittels eines von Hand betätigten Potentiometers oder ähnlichen Regelorgans bekannt; das Potentiometer wird von einem Drehgriff fernbedient, wobei zur einfachen Verstellübertragung eine biegsame Welle vorgesehen ist, die zur Ankopplung mit dem Drehgriff als biegefester Endstift mit axialem Abgang im Sinne einer starren Ankopplung derart aus einer Lagerbüchse ragt, daß auf sein herausragendes freies Ende der Drehgriff unverdrehbar befestigbar ist.

Durch die US-A-4 325 174 ist eine spezifische Materialzusammensetzung für eine Kreuzgelenkverbindung im Radantrieb eines Kraftfahrzeuges bekannt.

In beiden vorgenannten bekannten Fällen wird das Problem einer Luftklappenverstellung in einem Kraftfahrzeug von einem Bediengerät-Drehknopf aus über eine biegsame Welle bei geringem Platzbedarf weder angesprochen noch ausgelöst.

Die Erfindung wird im folgenden anhand eines schematisch dargestellten Ausführungsbeispiels in der Zeichnung näher erläutert; darin zeigen:

FIG 1 die Draufsicht auf ein Bediengerät,

FIG 2 in einem Längsschnitt das Bediengerät gemäß FIG 1 mit über eine Kreuzgelenkverbindung an einen Drehknopf angekoppelter biegsamer Stahlwelle,

FIG 3 in einem Teilbild die Drehwelle für einen Drehknopf mit integrierter Kreuzgelenkaufnahme,

FIG 4 in einem Teilschnittbild die Drehwelle gemäß FIG 3,

FIG 5 ein einzelnes Kreuzgelenk.

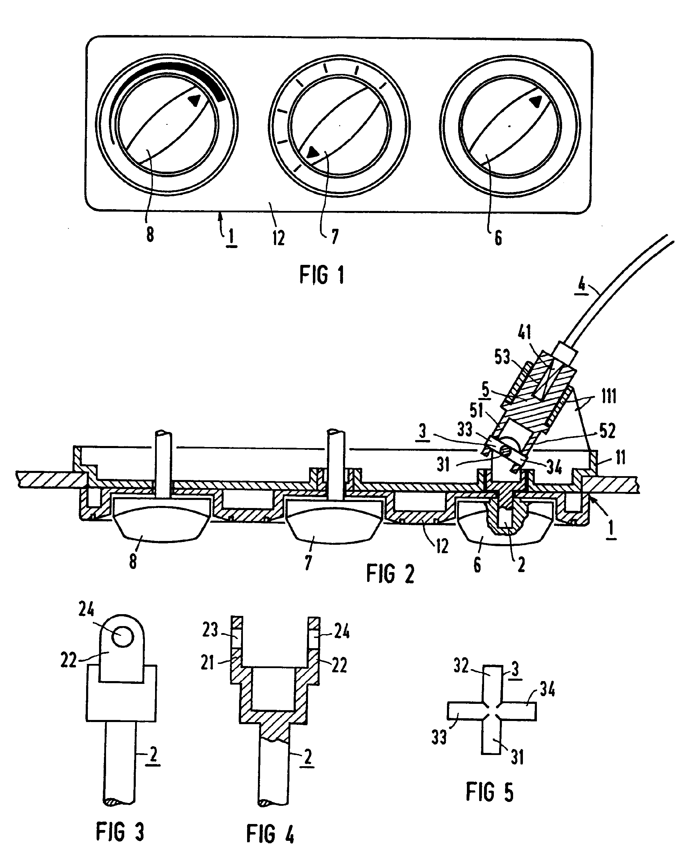

FIG 1 zeigt die frontraumseitige Draufsicht auf die Frontblende 12 einer in der Mittelebene eines Kraftfahrzeuges angebrachte zentrale Bedieneinheit 1 mit einem Gebläse-Drehknopf 8 zur Luftmengensteuerung, über den z.B. die Drehzahlstufung eines zentralen Ventilators am Eingang des Heiz- und Klimagerätes einstellbar sind, mit einem Temperatur-Drehknopf 7, über den in einer Mischkammer über eine Mischluftklappe Kaltluft- bzw. Warmluftanteile entsprechend mischbar sind und mit einem Luftverteil-Drehknopf 6, über den durch Luftklappenverstellung z.B. ein Defroster-Luftkanal, ein Mittelebenen-Luftkanal oder ein Fußraum-Luftkanal beschickbar sind.

FIG 2 zeigt in einem Teilschnittbild des Bediengerätes 1 gemäß FIG 1 die erfindungsgemäße Verstellübertragung von dem Drehknopf 6 über eine biegsame Stahlwelle 4 zu einer hier nicht näher dargestellten Luftklappen-Kulissenführung mit einer um eine Drehachse entsprechend der Drehung des Drehknopfes 6 drehbar verstellbaren Kulisse. Der Drehknopf 6 ist von axial vorne auf eine in einem Grundrahmen 11 des Bediengerätes 1 geführte Drehwelle 2 aufgesteckt, die an ihrem entgegengesetzten Ende mit einer Kreuzgelenkaufnahme, bestehend aus zwei Gabelarmen 21,22 mit Lageröffnungen 23,24 zur Aufnahme der Gelenkarme 31,32 des in FIG 5 dargestellten Kreuzgelenkes 3 integriert ist. Zur Aufnahme der beiden jeweils zu den ersten Gelenkarmen 31,32 senkrecht angeordneten zweiten Gelenkarmen 33,34 sind Gabelarme 51,52 an das eine Ende einer Zwischenwelle 5 angebracht, die an ihrem anderen Ende eine Einstecköffnung 53 für das vierkantförmig ausgebildete Einsteckende 41 der biegsamen Stahlwelle 4 aufweist und die in einer an das Bediengerät 1 einstückig angespritzten Zwischenwellenführung 111 einsteckbar und drehbar lagerbar ist. Der Abgangswinkel zwischen der Achse der Drehwelle 2 und der Richtung des Einsteckendes 41 der biegsamen Stahlwelle 4 liegt nach einer vorteilhaften Ausgestaltung der Erfindung in einem Bereich zwischen 0° bis 45°.

## Patentansprüche

1. Heiz- bzw. Klimagerät für ein Kraftfahrzeug mit fahrgastraumseitig über zumindest einen Drehknopf (6) eines Bediengerätes (1) mit nachgeordneter Verstellübertragung einstellbaren Luftklappen in zumindest einem zum Fahrgastinnenraum führenden Luftkanal, **dadurch gekennzeichnet**, daß als Verstellübertragung eine in schrägem Abgangswinkel zur Drehwelle (2) des Drehknopfes (6) an diesen über eine Kreuzgelenkverbindung ankuppelbare biegsame Stahlwelle (4) vorgesehen ist.

2. Heiz- bzw. Klimagerät nach Anspruch 1, **gekennzeichnet** durch einen Abgangswinkel der biegsamen Stahlwelle (4) zur Drehwelle (2) im Bereich zwischen 0° bis 45°.

3. Heiz- bzw. Klimagerät nach Anspruch 1 und/oder 2, **dadurch gekennzeichnet**, daß die Stahlwelle (4) über eine in dem Bediengerät (1) geführte Zwischenwelle (5) an die Kreuzgelenkverbindung ankuppelbar ist.

4. Heiz- bzw. Klimagerät nach Anspruch 1 und/oder 2, **dadurch gekennzeichnet**, daß die Drehwelle (2) des Drehknopfes (6) und die eine Aufnahme (Gabelarme 21,22) für das Kreuzgelenk (3) der Kreuzgelenkverbindung als einstückiges Spritzgußteil ausgebildet sind.

5. Heiz- und Klimagerät nach Anspruch 3, **dadurch gekennzeichnet**, daß die Zwischenwelle (5) und die andere Aufnahme (Gabelarme 51,52) für das Kreuzgelenk (3) der Kreuzgelenkverbindung als einstückiges Spritzgußteil ausgebildet sind.

## Claims

1. A heating or air-conditioning device for a motor vehicle with air valves in at least one air channel leading to the passenger inner compartment, able to be adjusted on the side of the passenger compartment by way of at least one control knob (6) of a control device (1) with an adjustment transmission element arranged thereafter, **characterised in that** provided as adjustment transmission element there is a flexible steel shaft (4), set at an oblique angle of departure to the torque shaft (2) of the control knob (6), and able to be coupled to this by way of a universal joint connection.

2. A heating or air-conditioning device according to claim 1, **characterised** by an angle of departure from the flexible steel shaft (4) to the torque shaft (2) in the region of between 0° to 45°.

3. A heating or air-conditioning device according to claim 1 and/or claim 2, **characterised in that** the steel shaft (4) is able to be coupled to the universal joint connection by way of an intermediate shaft (5) contained in the control device (1).

4. A heating or air-conditioning device according to claim 1 and/or claim 2, **characterised in that** the torque shaft (2) of the control knob (6) and one retainer (fork arms 21,22) for the universal joint (3) of the universal joint connection are formed as a one-piece injection moulded part.

5. A heating or air-conditioning device according to claim 3, **characterised in that** the intermediate shaft (5) and the other retainer (fork arms 51, 52) for the universal joint (3) of the universal joint connection are formed as a one-piece injection moulded part.

## Revendications

1. Appareil de chauffage et de climatisation d'un véhicule automobile, comprenant un volet d'aération, réglable de l'intérieur de l'habitacle par au moins un bouton à tourner (6) d'un appareil de contrôle (1) avec transmission du réglage en aval, dans au moins un conduit menant à l'intérieur de l'habitacle, **caractérisé en ce qu'**il est prévu, comme transmission du réglage, un axe (4) souple en acier, incliné d'un certain angle par rapport à l'axe (2) de rotation du bouton à tourner (6), et pouvant être couplé à ce dernier par une articulation à la cardan.

2. Appareil de chauffage et de climatisation suivant la revendication 1, **caractérisé** par un angle de l'axe (4) souple en acier et de l'axe de rotation (2) compris entre 0° et 45°.

3. Appareil de chauffage et de climatisation suivant la revendication 1 et/ou 2, **caractérisé en ce que** l'axe (4) en acier peut être couplé à l'articulation à la cardan par un axe intermédiaire (5) guidé dans l'appareil de contrôle (1).

4. Appareil de chauffage et de climatisation suivant la revendication 1 et/ou 2, **caractérisé en ce que** l'axe (2) de rotation du bouton à tourner (6) et l'une des pièces de réception (bras de fourche 21, 22) du croisillon (3) de l'articulation à la cardan, sont constitués d'une pièce moulée par injection d'un seul tenant.

5. Appareil de chauffage et de climatisation suivant la revendication 3, **caractérisé en ce que** l'axe (5) intermédiaire et l'autre pièce de réception (bras de fourche 51, 52) du croisillon (3) de l'articulation à la cardan, sont constitués d'une pièce moulée par injection d'un seul tenant.

FIG 1

FIG 2

FIG 3

FIG 4

FIG 5